# EUROPEAN PATENT APPLICATION

(11) **EP 3 474 192 A1**
(43) Date of publication of application: **24.04.2019**
(21) Application number: 17290131.6
(22) Date of filing: 19.10.2017
(51) Int. Cl.: G06N 3/02

(54) **CLASSIFYING DATA**

(71) Applicant: Koninklijke Philips N.V., 5656 AE Eindhoven (NL)
(72) Inventor: RAYNAUD, Caroline, FR - 92150 Suresnes Cedex (FR); MENKOVSKI, Vlado, 5656 AE Eindhoven (NL); VAN DEN Heuvel, Teun, 5656 AE Eindhoven (NL); BRESCH, Erik, 5656 AE Eindhoven (NL); MAVROEDIS, Dimitrios, 5656 AE Eindhoven (NL); RAHMAN, Asif, Cambridge, 02141 (US)
(74) Representative: de Haan, Poul Erik

(57) **Abstract**

Methods for classifying data comprise using (202) a model to classify a first portion of data into a classification, receiving (204) a plurality of other portions of data and classifications for the plurality of other portions of data, the classifications for the plurality of other portions of data having been determined using the model, and using (206) the model to identify, from the plurality of other portions of data, a particular portion of data which has at least one feature, as used by the model, in common with the first portion of data and a different classification to the first portion of data.

## Description

### TECHNICAL FIELD

Various embodiments described herein relate to the field of classifying data. More particularly, but not exclusively, various embodiments relate to systems and methods of classifying data using a model.

### BACKGROUND

It is important for users to have faith in new technologies if they are to be adopted, particularly in healthcare scenarios where, for example, the technology may be used to make healthcare decisions. Users tend to trust traditional systems because their operations are quite transparent and therefore their behavior is reasonably predictable.

In machine learning there is often a tradeoff between accuracy and intelligibility. More accurate models, such as deep neural networks, have proven to be successful in learning useful semantic representation of data. However, deep neural networks have complex architectures and processes that make it hard for users to understand the decision-making processes performed in the neural network. Deep learning based systems therefore tend to lack transparency and predictability due to their complex structure and data-driven design process.

As a result of this lack of transparency in the classification process, users may come to distrust classifications made by a neural network because they cannot easily verify the validity of the classification or the methodology behind the classification process. Furthermore a user may disagree with an output and, without knowing how the neural network came to the decision that it did, this can breed distrust in the system. As a result, this can lead to discontinuation of use, or reduced adoption of what may actually be a very accurate, high performance technology.

There is therefore a need for methods and systems to improve the above-mentioned problems.

### SUMMARY

According to a first aspect, there is a computer implemented method for classifying data. The method comprises using a model to classify a first portion of data into a classification, receiving a plurality of other portions of data and classifications for the plurality of other portions of data, the classifications for the plurality of other portions of data having been determined using the model, and using the model to identify, from the plurality of other portions of data, a particular portion of data which has at least one feature, as used by the model, in common with the first portion of data and a different classification to the first portion of data.

In some embodiments, the model is a neural network.

In some embodiments, using the model to identify the particular portion of data comprises determining a first activation pattern describing the way in which neurons in the neural network are activated by the first portion of data when the neural network is used to classify the first portion of data. The method further comprises, for each other portion of data in the plurality of other portions of data: determining a second activation pattern describing the way in which neurons in the neural network are activated by said other portion of data when the neural network is used to classify said other portion of data and comparing the first activation pattern to the second activation pattern.

In some embodiments, the first activation pattern describes the way in which neurons in a particular layer of the neural network are activated when the neural network classifies the first portion of data.

In some embodiments, the first activation pattern describes the way in which a particular neuron in the neural network is activated when the neural network classifies the first portion of data.

In some embodiments, the first activation pattern comprises a first set of values representing activation levels of neurons in the neural network and the second activation pattern comprises a second set of values representing activation levels of neurons in the neural network.

In some embodiments, the method further comprises performing multidimensional clustering on the first set of values in the first activation pattern and the second set of values for each determined second activation pattern. In such embodiments, the particular portion of data lies within at least one cluster associated with the first activation pattern of the first portion of data.

In some embodiments, the method further comprises, for each other portion of data in the plurality of other portions of data: calculating a multidimensional distance between the first set of values in the first activation pattern and the second set of values for each determined second activation pattern. In such embodiments, the step of identifying the particular portion of data is based on the calculated multidimensional distances.

In some embodiments, the particular portion of data comprises a portion of data in the plurality of other portions of data for which the calculated multidimensional distance is lower than a threshold distance.

In some embodiments, using the model to identify the particular portion of data comprises identifying a first set of neurons in the neural network that are activated outside of activation ranges associated with said first set of neurons by the first portion of data during the step of using the model to classify the first portion of data and using the identified first set of neuron activations as the at least one feature with which to identify the particular portion of data.

In some embodiments, the method further comprises, for each other portion of data in the plurality of other portions of data: identifying a second set of neurons in the neural network that are activated outside of activation ranges associated with said second set of neurons by said other portion of data when the neural network classifies said other portion of data and comparing the identified second set of neuron activations to the identified first set of neuron activations.

In some embodiments, the method further comprises displaying the identified particular portion of data to a user.

In some embodiments, the method further comprises using the identified particular portion of data in a training process to improve the classifications made by the model.

According to a second aspect, there is a computer program product comprising a non-transitory computer readable medium, the computer readable medium having computer readable code embodied therein, the computer readable code being configured such that, on execution by a suitable computer or processor, the computer or processor is caused to perform the method of any of the embodiments described herein.

According to a third aspect, there is a system comprising a memory comprising instruction data representing a set of instructions and a processor configured to communicate with the memory and to execute the set of instructions. The set of instructions, when executed by the processor, cause the processor to use a model to classify a first portion of data into a classification, receive a plurality of other portions of data and classifications for the plurality of other portions of data, the classification for the plurality of other portions of data having been determined using the model, and use the model to identify, from the plurality of other portions of data, a particular portion of data which has at least one feature, as used by the model, in common with the first portion of data and a different classification to the first portion of data.

### BRIEF DESCRIPTION OF THE DRAWINGS

For a better understanding of the embodiments, and to show more clearly how they may be carried into effect, reference will now be made, by way of example only, to the accompanying drawings, in which:
Figure 1 illustrates an example system according to an embodiment;
Figure 2 illustrates a computer-implemented method according to an embodiment;
Figure 3 illustrates an example output of a method according to an embodiment, as displayed to a user; and
Figure 4 illustrates an example method according to an embodiment.

### DETAILED DESCRIPTION OF THE EMBODIMENTS

As noted above, there is provided an improved method and system for classifying data, which overcomes some of the existing problems.

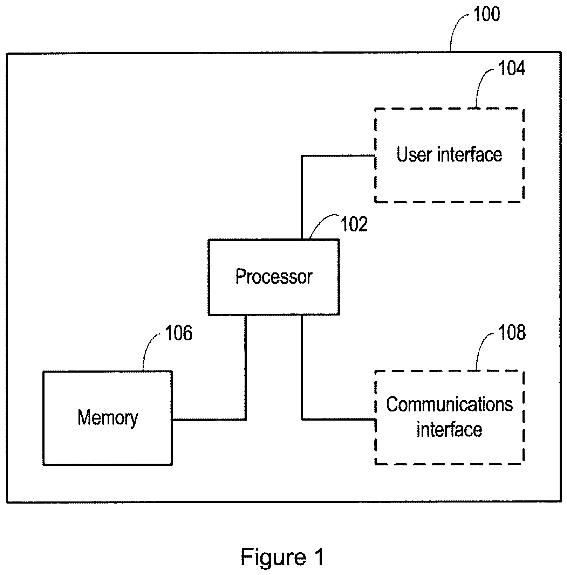

Figure 1 shows a block diagram of a system 100 according to an embodiment that can be used for classifying data. With reference to Figure 1, the system 100 comprises a processor 102 that controls the operation of the system 100 and that can implement the method described herein. The system 100 may further comprise a memory 106 comprising instruction data representing a set of instructions. The memory 106 may be configured to store the instruction data in the form of program code that can be executed by the processor 102 to perform the method described herein. In some implementations, the instruction data can comprise a plurality of software and/or hardware modules that are each configured to perform, or are for performing, individual or multiple steps of the method described herein. In some embodiments, the memory 106 may be part of a device that also comprises one or more other components of the system 100 (for example, the processor 102 and/or one or more other components of the system 100). In alternative embodiments, the memory 106 may be part of a separate device to the other components of the system 100.

The processor 102 of the system 100 can be configured to communicate with the memory 106 to execute the set of instructions. The set of instructions, when executed by the processor may cause the processor to perform the method described herein. The processor 102 can comprise one or more processors, processing units, multi-core processors or modules that are configured or programmed to control the system 100 in the manner described herein. In some implementations, for example, the processor 102 may comprise a plurality of processors, processing units, multi-core processors and/or modules configured for distributed processing. It will be appreciated by a person skilled in the art that such processors, processing units, multi-core processors and/or modules may be located in different locations and may each perform different steps and/or different parts of a single step of the method described herein.

Briefly, the set of instructions, when executed by the processor 102 of the system 100 cause the processor 102 to use a model to classify a first portion of data into a classification. The set of instructions further cause the processor to receive a plurality of other portions of data and classifications for the plurality of other portions of data, the classifications for the plurality of other portions of data having been determined using the model. The set of instructions, when executed by the processor 102 further cause the processor to use the model to identify, from the plurality of other portions of data, a particular portion of data which has at least one feature, as used by the model, in common with the first portion of data and a different classification to the first portion of data.

In this way, the particular portion of data provides an example of another portion of data that has features in common (and thus similarities) with the first portion of data, but nevertheless, a different classification to the first portion of data. In this way, the decision making process of the model can effectively be "probed" to provide examples of similar data with different classifications. This helps to shed light on the decision-making process of the model, and enables users to have increased confidence in the classifications made by the model.

In some embodiments, the set of instructions, when executed by the processor 102, may also cause the processor 102 to control the memory 106 to store data and information relating to the methods described herein. For example, the memory 106 may be used to store any of the model, the first portion of data, the received plurality of other portions of data, the received classifications for the plurality of other portions of data, the particular portion of data, or any other data or information, or any combinations of data and information, which result from the method described herein.

In any of the embodiments described herein, the first portion of data may comprise any data that can be processed by a model (such as a machine learning model). For example, the first portion of data may comprise any one or any combination of: text, image data, sensor data, instrument logs and/or records. In some embodiments, the first portion of data may comprise medical data such as any one or any combination of medical images (for example, images acquired from a CT scan, X-ray scan, or any other suitable medical imaging method), an output from a medical instrument or sensor (such as a heart rate monitor, blood pressure monitor, or other monitor) or medical records. Although examples have been provided of different types of portions of data, a person skilled in the art will appreciate that the teachings provided herein may equally be applied to any other type of data that can be processed by a model (such as a machine learning model).

In some embodiments, as illustrated in Figure 1, the system 100 may comprise at least one user interface 104 configured to receive any of the user inputs described herein. The user interface 104 may allow a user of the system 100 to manually enter instructions, data, or information relating to the method described herein. For example, a user interface 104 may be used by a user to select or indicate a first portion of data on which to perform the method described herein (i.e. on which to perform the classification process). The user interface 104 may be any type of user interface that enables a user of the system 100 to provide a user input, interact with and/or control the system 100. For example, the user interface 104 may comprise one or more switches, one or more buttons, a keypad, a keyboard, a mouse, a touch screen or an application (for example, on a tablet or smartphone), or any other user interface, or combination of user interfaces that enables the user to select a first portion of data to be classified.

In some embodiments, the user interface 104 (or another user interface of the system 100) may enable rendering (or output or display) of information, data or signals to a user of the system 100. As such, a user interface 104 maybe for use in providing a user of the system 100 (for example, a medical professional, a healthcare provider, a healthcare specialist, a care giver, a subject, or any other user) with information relating to or resulting from the method according to embodiments herein. The processor 102 may be configured to control one or more user interfaces 104 to provide information resulting from the method according to embodiments herein. For example, the processor 102 may be configured to control one or more user interfaces 104 to render (or output or display) the first portion of data, one or more of the plurality of other portions of data, the particular portion of data, or any other information (such as classifications), or any combination information, which results from the method described herein. The user interface 104 may, in some embodiments, comprise a display screen, a graphical user interface (GUI) or other visual rendering component, one or more speakers, one or more microphones or any other audio component, one or more lights, a component for providing tactile feedback (e.g. a vibration function), or any other user interface, or combination of user interfaces for providing information relating to, or resulting from the method, to the user. In some embodiments, the user interface 106 may be part of a device that also comprises one or more other components of the system 100 (for example, the processor 102, the memory 104 and/or one or more other components of the system 100). In alternative embodiments, the user interface 106 may be part of a separate device to the other components of the system 100.

In some embodiments, as illustrated in Figure 1, the system 100 may also comprise a communications interface (or circuitry) 108 for enabling the system 100 to communicate with any interfaces, memories and devices that are internal or external to the system 100. The communications interface 108 may communicate with any interfaces, memories and devices wirelessly or via a wired connection.

It will be appreciated that Figure 1 shows the components required to illustrate this aspect of the disclosure and, in a practical implementation, the system 100 may comprise other components in addition to those shown. For example, the system 100 may comprise a battery or other power supply for powering the system 100 or means for connecting the system 100 to a mains power supply.

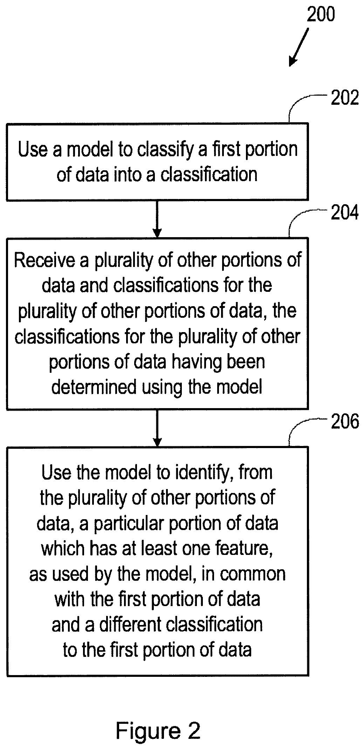

Figure 2 illustrates a computer-implemented method 200 for classifying data according to an embodiment The illustrated method 200 can generally be performed by or under the control of the processor 102 of the system 100. The method may be partially or fully automated according to some embodiments.

The method comprises using a model to classify a first portion of data into a classification (in block 202), receiving a plurality of other portions of data and classifications for the plurality of other portions of data, the classifications for the plurality of other portions of data having been determined using the model (in block 204), using the model to identify, from the plurality of other portions of data, a particular portion of data which has at least one feature, as used by the model, in common with the first portion of data and a different classification to the first portion of data (in block 206).

In this way, as described above with respect to system 100, a particular portion of data is identified that has features in common with (e.g. similarities to) the first portion of data, which, despite the common features, was given a different classification (by the model) to the first portion of data. This can be used to provide information to a user to help the user understand why the first portion of data was classified in the way that it was. The user may be able to look for differences between the first portion of data and the particular portion of data to see how the model distinguished between them. This helps to provide more clarity to the user as to the classification methodology of the model, thus improving user confidence in the model's accuracy and reliability.

As described above with respect to system 100, the first portion of data may comprise any data that can be processed by the model (e.g. any combination of images, values and/or alpha-numeric strings, including but not limited to medical images, medical records and/or sensor readings, or any other type of data that can be processed by the model).

The model may be any type of model that can be used for classifying the first portion of data. In some embodiments, the model may be a model for use in classifying the first portion of data as one or more types of data (e.g. classifying a portion of data as a particular type of medical data, such as a medical record). In some embodiments, the model may be a model for use in classifying the first portion of data according to content. For example, in embodiments where the first portion of data is an image, the model may classify the image according to what is shown in the image (e.g. "heart" or "lung"). In some embodiments, the model may classify the first portion of data according to an interpretation of the contents (for example, a structure in an image may be classified as "cancerous" or "non-cancerous").

In some embodiments, the model may be a hard-coded model comprising a set of hard-coded rules. In some embodiments, the model may be a machine learning model. In some embodiments the model maybe an artificial neural network. In some embodiments the model may be a deep neural network.

Artificial neural networks or, simply, neural networks, will be familiar to those skilled in the art, but in brief, a neural network is a type of model that can be used to classify data (for example, classifying image data). The structure of a neural network is inspired by the human brain. Neural networks are comprised of layers, each layer comprising a plurality of neurons. Each neuron comprises a mathematical operation. In the process of classifying a portion of data, the mathematical operation of each neuron is performed on the portion of data to produce a numerical output, and the outputs of each layer in the neural network are fed into the next layer sequentially. The magnitude of the numerical output of a neuron (when classifying a portion of data) is often referred to as the "activation level" of that neuron. In some neural networks, such as convolutional neural networks, lower layers in the neural network (i.e. layers towards the beginning of the series of layers in the neural network) are activated by (i.e. their output depends on) small features or patterns in the portion of data being classified, while higher layers (i.e. layers towards the end of the series of layers in the neural network) are activated by increasingly larger features in the portion of data being classified. As an example, where the first portion of data comprises an image and the model comprises a neural network, lower layers in the neural network are activated by small features (e.g. such as edge patterns in the image), mid-level layers are activated by features in the image, such as, for example, larger shapes and forms, whilst the layers closest to the output (e.g. the upper layers) are activated by entire objects in the image. Portions of data of different classifications create different activation patterns (e.g. have different activation signatures in the network). For example, images of hearts produce different activation patterns to images of lungs. A neural network thus classifies portions of data according to the activation patterns they produce in the neural network.

In general, as will be described in more detail below, a neuron may be considered to have a "high" or "strong" activation if the mathematical operation produces an output outside of a range that is normal (e.g. statistically average, or approximately average) for that neuron. Conversely, a neuron may be considered to have a "low" or "weak" activation if the mathematical operation produces an output that falls within a range that is normal (e.g. statistically average, or approximately average) for that neuron. A normal range may be defined statistically (for example, a certain number of standard deviations from an average activation level for the neuron when the neuron classifies portions of data). Another way of comparing activation levels of neurons is to compare the activation level of a neuron to other neurons on the neural network. For example, an activation of a neuron may be considered high or low when compared to the magnitudes of activations of other neurons in the same layer. In some embodiments, a neuron may be considered to be highly activated if the activation level of the neuron (e.g. the numerical output) is statistically outlying compared to the activation levels of other neurons in the same layer. A statistical outlier may be defined in many different ways, as will be appreciated by the person skilled in the art. As an example, a neuron may have an activation level that is statistically outlying if its value is more than a number, x, standard deviations from the average activation level of neurons in the same layer. The person skilled in the art will be familiar with other ways of determining a statistical outlier.

In some examples, a range of activation of a neuron (e.g. a numerical range output by the neuron) may depend on the type of mathematical operation performed by that neuron. Some neurons are activated (e.g. produce outputs) between 0 and 1 (for example neurons employing sigmoid functions), while others may have unbounded activation levels (e.g. they may produce outputs anywhere between -∞ and +∞).

In some examples herein, where the first portion of data comprises an image and the model is for classifying the contents of the image, each neuron in the neural network may comprise a mathematical operation comprising a weighted linear sum of the pixel (or in three dimensions, voxel) values in the image followed by a non-linear transformation. Examples of non-linear transformations used in neural networks include sigmoid functions, the hyperbolic tangent function and the rectified linear function. The neurons in each layer of the neural network generally comprise a different weighted combination of a single type of transformation (e.g. the same type of transformation, sigmoid etc. but with different weightings). As will be familiar to the skilled person, in some layers, the same weights may be applied by each neuron in the linear sum; this applies, for example, in the case of a convolution layer. The output of each neuron may be a number and as noted above, the magnitudes of the numerical outputs of the neurons form a neuron activation pattern that may be used to classify the image.

Returning now to Figure 2, in block 202 the model is used to classify the first portion of data into a classification (e.g. the first portion of data is fed into and classified by the model). The classification may be stored, for example in a memory 106 or database associated with the system 100.

In block 204, the method comprises receiving a plurality of other portions of data and classifications for the plurality of other portions of data, the classifications for the plurality of other portions of data having been determined using the model.

The plurality of other portions of data may comprise any data that can be processed by the model (e.g. any combination of images, values and/or alpha-numeric strings, including but not limited to medical data, such as medical images, medical records and/or sensor readings, or any other type of data that can be processed by the model). In some embodiments, the plurality of other portions of data comprise other examples of the same data type as the first portion of data. For example, if the first portion of data comprises an image, the plurality of other portions of data may comprise a plurality of other images. As another example, if the first portion of data comprises an image of an anatomical structure, the plurality of other portions of data may comprise a plurality of other images of the same type of anatomical structure for different subjects (for example, images of a plurality of different organs of the same type, such as images of different subjects' hearts).

In some embodiments, the block 204 of receiving comprises receiving the plurality of other portions of data and the classifications for the plurality of other portions of data from a database. For example, the database may comprise the portions of data and their classifications, as determined by the same model as is used to classify the first portion of data in the block 202. In some embodiments, the database may further contain other information about each other portion of data in the plurality of other portions of data. For example, the database may further comprise annotations of features of one or more of the other portions of data. In some examples, annotations may be annotations added by a user, such as a medical professional. Examples of annotations include, but are not limited to, user classifications or labels of features in the other portion of data (for example, a user may highlight a feature in the other portion of data, such as the location of an anatomical structure, or the location of an abnormality) and user interpretation of the content of one or more of the plurality of other portions of data, such as, for example, the user's diagnosis of a condition or disease, as derived from the contents of the other portion of data.

In some embodiments, method 200 of Figure 2 may further comprise using the model to classify each of the plurality of other portions of data into a classification. The classifications (e.g. output by the model) for the plurality of other portions of data may then be received in block 204. In some embodiments, the classifications for the plurality of other portions of data may be stored, for example in a memory 106 or in a database associated with the system 100.

In block 206, the method comprises using the model to identify, from the plurality of other portions of data, a particular portion of data. The particular portion of data has at least one feature, as used by the model (e.g. a feature used in classifying the first portion of data and the particular portion of data), in common with the first portion of data and a different classification to the first portion of data.

Generally, a feature may comprise any information relating to the first portion of data that can be used by the model to classify the first portion of data. Examples of features include, but are not limited to, measurable properties, observed properties, derived properties or any other properties (or characteristics) of the portion of data, or any combinations of properties (or characteristics) of the portion of data. In some embodiments, as discussed in more detail below, a feature may comprise an activation pattern (or part of an activation pattern) in a neural network. In some examples, a feature may comprise a cluster in a multi-dimensional parameter space corresponding to neuron activation levels of a plurality of neurons in a neural network. In some embodiments, a feature comprises a statistically significant activation of a neuron in a neural network.

Generally, block 206 may comprise determining that another portion of data from the plurality of other portions of data has at least one feature in common with the first portion of data, comparing the classification of said other portion of data to the classification of the first portion of data and identifying said other portion of data as the particular portion of data if the classifications are different

In embodiments where the model is a hard-coded model, comprising a set of hard-coded rules, a feature maybe regarded as the outcome of one of the rules. As such, block 206 may comprise using the model to identify, from the plurality of other portions of data, a particular portion of data which produces the same outcome for at least one of the hard-coded rules as the first portion of data, but which is given a different classification by the model to the classification given to the first portion of data by the model. In this way, the particular portion of data provides examples that illustrate the decision making process of the model.

In embodiments where the model is a neural network, a feature may, in some examples, comprise a neuron activation pattern in the neural network. As such, the particular portion of data may be identified by comparing the activation pattern of the neurons in the neural network when the neural network classifies the first portion of data, to the activation patterns of the neurons in the neural network when the neural network classifies each of the other portions of data in the plurality of other portions of data. As such, a particular portion of data may have at least one feature in common with the first portion of data if it has at least one activation pattern in common with the first portion of data.

As such, in some embodiments, block 206 of Figure 2 may comprise determining a first activation pattern describing the way in which neurons in the neural network are activated by the first portion of data when the neural network is used to classify the first portion of data. For each other portion of data in the plurality of other portions of data, block 206 of Figure 2 may then comprise determining a second activation pattern describing the way in which neurons in the neural network are activated by said other portion of data when the neural network is used to classify said other portion of data. The first activation pattern may then be compared to each of the aforementioned second activation patterns (e.g. to determine a particular portion of data that produces a neuron activation pattern in one or more neurons of the model which is the same as, or similar to, that of the first portion of data).

In some embodiments, the first activation pattern describes the manner in which neurons in the neural network are activated when the neural network classifies the first portion of data. In some embodiments, the first activation pattern includes neurons in different layers of the neural network. In some embodiments, the first activation pattern describes the way in which neurons in a particular layer of the neural network are activated when the neural network classifies the first portion of data. In further embodiments, the first activation pattern describes the way in which a particular neuron in the neural network is activated when the neural network classifies the first portion of data.

As described above, neurons in different layers of the neural network are activated by (i.e. the numerical output depends on) features of different scales of a portion of data. Thus, block 206 of using the model to identify a particular portion of data, may comprise identifying a particular portion of data which has at least one activation pattern in a particular layer of the neural network, in common with the first portion of data. For example, in some embodiments, block 206 comprises identifying a particular portion of data which has at least one activation pattern in an outer layer of the neural network, in common with the first portion of data. Outer layers are activated by the largest features of a portion of data (such as entire objects in an image) and as such, portions of data in the plurality of other portions of data having common activation patterns in an outer layer of the neural network to the first portion of data, correspond to portions of data having the most similar global features to the first portion of data. As such, identifying a particular portion of data having an activation pattern in an outer layer of the neural network in common with the first portion of data, yet a different classification, has the advantage of identifying a particular portion of data with similar large scale features that nonetheless was classified differently to the first portion of data. Although there may be advantages associated with using activation patterns in higher layers, it will be appreciated by the skilled person that activation patterns in any layer or combination of layers can be to identify the particular portion of data.

It will be understood by the person skilled in the art that no two activation patterns will be identical (because the numerical outputs are produced on a continuous scale). Therefore, in some embodiments, another portion of data in the plurality of other portions of data may be identified as having an activation pattern in common with the first portion of data if the patterns are within a tolerance (or threshold similarity) of one another.

Generally, the first activation pattern may comprise a first set of values representing activation levels of neurons in the neural network and each of the second activation patterns may comprise a second set of values representing activation levels of neurons in the neural network. In some embodiments, therefore, the first set of values representing activation levels of neurons in the neural network (when the neural network classifies the first portion of data) may be compared to each second set of values representing activation levels of neurons in the neural network (when the neural network classifies each of the plurality of other portions of data).

In some embodiments, block 206 further comprises identifying the particular portion from the first set of values and each second set of values associated with each other portion of data in the plurality of portions of data. In some embodiments, block 206 may comprise for each other portion of data in the plurality of other portions of data, calculating a multidimensional distance between the first set of values in the first activation pattern and the second set of values for each determined second activation pattern. For example, considering each neuron as a dimension in a multi-dimensional space, a Euclidian distance can be calculated (e.g. according to a squared sum of the difference between the first set of values and the second set of values of each neuron activation level).

The particular portion of data may then be identified based on the calculated multidimensional distances. For example, the particular portion of data may comprise a portion of data in the plurality of other portions of data for which the calculated multidimensional distance is lower than a threshold distance. As such, a portion of data in the plurality of other portions of data has at least one feature in common with the first portion of data if it has a multi-dimensional distance lower than the threshold distance. As will be appreciated by a person skilled in the art, an appropriate threshold value for use in identifying the particular portion of data will depend on the neurons in model and the portions of data being classified. An appropriate threshold may further depend on the intended number of features that the particular portion of data has in common with the first portion of data. For example, generally, lowering the threshold will decrease the number of features that the first portion of data has in common with the particular portion of data.

In some embodiments, multidimensional clustering may be performed on the first set of values in the first activation pattern and the second set of values for each determined second activation pattern. For example, the first set of activation values associated with the first portion of data and the second set of active activation values associated with each other potion of data may be plotted in a multi-dimensional parameter space. In such embodiments, a feature may comprise a cluster in the multi-dimensional parameter space. A particular portion of data may be identified from the plurality of other portions of data as a portion of data that lies within at least one cluster associated with the first activation pattern of the first portion of data, but having a different classification to the first portion of data.

In some embodiments, block 206 of Figure 2 may comprise identifying a first set of neurons in the neural network that are activated by the first portion of data (during block 202 of using the model to classify the first portion of data) outside of activation ranges associated with said first set of neurons. The method may further comprise using the identified first set of neuron activations as the at least one feature with which to identify the particular portion of data. In other words, a neuron in the neural network that is activated outside of an activation range associated with the neuron (e.g. a statistically outlying activation), may be used as a feature with which to identify the particular portion of data.

In more detail, as described above, each neuron is activated (e.g. produces a numerical output) within upper and lower limits. The upper and lower limits of the activation levels depend on the mathematical operations performed by the neuron. Within these upper and lower limits, a neuron may typically be activated within a certain range within the upper and lower limit. For example, although a neuron may be activated between upper and lower limits, for most portions of data, the neuron may only be activated within an activation range associated with the neuron. When classifying a portion of data, the classification may be determined based on certain strong characteristics or features of the portion of data which may produce strong (e.g. statistically unusual) activations in certain neurons in the network whereby the activation lies outside (above or below) the activation range associated with the neuron.

As such, in some embodiments, identifying a first set of neurons in the neural network that are activated outside of activation ranges associated with said first set of neurons may comprise comparing the activation level of a neuron (i.e. an activation level used in classifying the first portion of data) to the activation levels of the same neuron used in classifying other portions of data. For example, an average activation level and associated standard deviation of the distribution of activation levels may be calculated. Identifying a first set of neurons in the neural network that are activated outside of activation ranges associated with said first set of neurons may thus comprise identifying neurons that are activated (by the first portion of data) by more than a certain number of standard deviations from (e.g. above or below) the average activation of the neuron.

In some embodiments, identifying a first set of neurons in the neural network that are activated outside of activation ranges associated with said first set of neurons may comprise comparing the activation level of a neuron (when classifying the first portion of data) to the activation levels of other neurons in the same layer when classifying the first portion of data. Generally, neurons in the same layer comprise the same mathematical operations (with different weightings), and thus the activations of the neurons in a layer are directly comparable (e.g. a sigmoid layer always produces an output between 0 and 1). Thus, activation levels of neurons within a layer can be compared to find the most strongly (e.g. statistically unusually) activated neurons in a layer.

In some embodiments, the method further comprises, for each other portion of data in the plurality of other portions of data, identifying a second set of neurons in the neural network that are activated outside of activation ranges associated with said second set of neurons by said other portion of data when the neural network classifies said other portion of data, and comparing the identified second set of neuron activations to the identified first set of neuron activations.

In some embodiments, comparing the identified second set of neuron activations to the identified first set of neuron activations comprises determining whether the identified first set of neuron activations and any of the identified second sets of neuron activations have any neurons in common. The particular portion of data may then comprise a portion of data from the plurality of other portions of data having a neuron (from the first set of neuron activations) in common and a different classification to the first portion of data.

According to the embodiments described above, there is a method and system for identifying a particular portion of data. Because the particular portion of data represents a portion of data that has at least one feature in common with the first portion of data, it may be considered to be similar to the first portion of data in some way, but nonetheless, the model classified the particular portion of data as a different classification to the first portion of data. The method 200 may therefore be used to identify a particular portion of data that may be used to help elucidate the classification process of the model. In some embodiments, the particular portion of data may be considered to be a counter-example, because it may serve to illustrate a counter-classification made by the model of a similar portion of data to the first portion of data. This particular portion of data may thus be used to highlight to a user the manner in which the model classified the first portion of data and/or discriminates between classifications similar to the classification given to the first portion of data.

Although not illustrated in Figure 2, any of the embodiments described herein may further comprise displaying the identified particular portion of data to a user, for example using user interface 104 of system 100. In some embodiments, the first portion of data may be displayed to the user alongside the particular portion of data.
In some embodiments, the classification of the first portion of data and/or the classification of the particular portion of data may further be displayed to the user. In this way, the user is able to compare the first portion of data to the particular portion of data and gain deeper insight into the classification process of the model. For example, the user may be able to observe similarities and/or differences between the first portion of data and the particular portion of data that led the model to classify the first portion of data in the way that it did. In further embodiments still, other information about the particular portion of data may be provided to the user, such as, for example, one or more annotations of the particular portion of data. As noted above, with respect to block 204, an annotation may be information about the portion of data that has been added by a user (e.g. such as a medical professional). If the displayed annotations were used to train the model, then such annotations may provide further insight into the classification process of the model and may be used to improve the classifications of the model (for example, by improving the quality of the annotations provided to the model in the training process).

Although not illustrated in Figure 2, any of the embodiments described herein may further comprise using the model to identify, from the plurality of other portions of data, a similar portion of data to the first portion of data, the similar portion of data having at least one feature, as used by the model, in common with the first portion of data and the same classification as the first portion of data. In some embodiments, the method may further comprise displaying the similar portion of data to a user. In this way, the user may be provided with examples of other portions of data that are similar to (e.g. have features in common with) and are classified the same as the first portion of data, in addition to the particular portion of data that has features in common with the first portion of data but a different classification. This may provide further insights into the types of portions of data that are classified in the same way as the first portion of data as well as differently to the first portion of data.

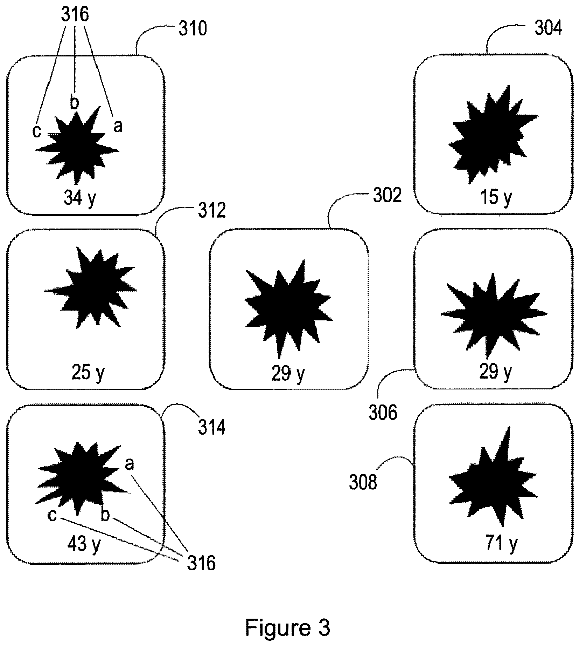

This is illustrated in Figure 3 which shows an example output of the method 200 according to an embodiment, as displayed to a user. In this embodiment, the first portion of data comprises an image 302 of a spiky shape which may, for example, represent an anatomical object in a medical image. Three particular portions of data 304, 306, 308 have been identified according to the methods described with respect to block 206 of Figure 2 above, and these are displayed next to the first portion of data. The particular portions of data each have at least one feature in common with the first portion of data 302 (for example, they all comprise spikes), but were classified with a different classification to the first portion of data 302. Three similar portions of data are also displayed 310, 312, 314. The three similar portions of data have at least one feature in common with the first portion of data 302 and the same classification as the first portion of data 302. In this example, annotations 316 of some of features of some of the portions of data are also displayed, along with additional context data (e.g. the age of the subject that each portion of data relates to).

Although not illustrated in Figure 2, any of the embodiments described herein may further comprise using the identified particular portion of data in a training process to improve the classifications made by the model. For example, in embodiments comprising displaying the identified particular portion of data to a user, the user may provide feedback on the particular portion of data. For example, the user may provide feedback on the classification of the particular portion of data and/or the classification of the first portion of data. Such feedback may be used to re-train the model. For example, the feedback may be used to select further portions of data (e.g. similar or dissimilar to the identified portion of data) with which to further train the model.

Alternatively or additionally, a user may provide feedback as to whether the particular portion of data helped the user to better understand the classification process of the model. Such feedback may be used to improve the selection of the particular portion of data so as to improve the information provided to the user to further improve their confidence in the classifications made by the model.

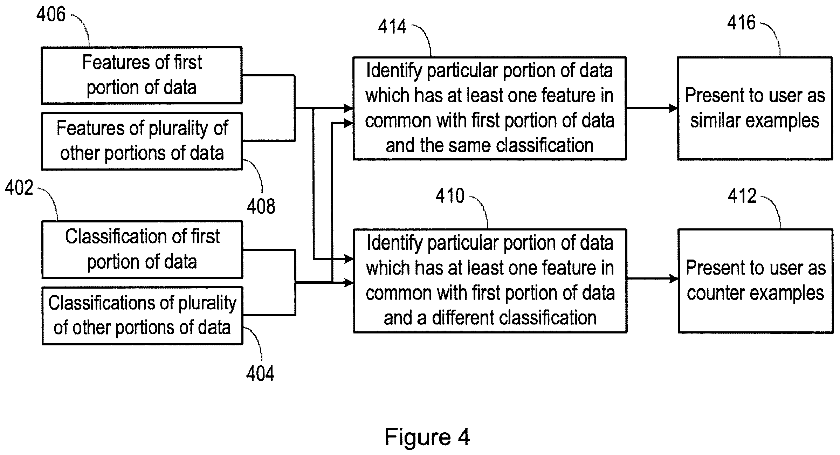

Figure 4 is a flow diagram illustrating another embodiment. In block 402, a classification of the first portion of data, determined using the model, is received. This may be received, for example, as an output of block 202 of Figure 2, as described above. In block 404, classifications of a plurality of other portions of data, as determined using the model, are received, as described, for example, with respect to block 204 of Figure 2 above. In addition to the classifications, the features of the first portion of data and the features of each of the plurality of other portions of data are input at blocks 406 and 408 respectively. Example features are described above with reference to block 206 of Figure 2.

In block 410, a particular portion of data is identified, from the plurality of other portions of data, which has at least one feature in common with the first portion of data. The particular portion of data can be identified by comparing the features of the first portion of data from block 406 with the features of the plurality of other portions of data from block 408. In block 412, the identified particular portion of data is presented to the user as a counter-example (e.g. a portion of data that, despite having features in common with the first portion of data, nonetheless has a different classification to the first portion of data).

In block 414, the classification of the first portion of data (from block 402), the classifications of the plurality of other portions of data (from block 404), the features of the first portion of data (from block 406) and the features of the plurality of other portions of data (from block 408) are used to identify a similar portion of data from the plurality of other portions of data that has at least one feature in common with the first portion of data and the same classification as the first portion of data. In block 416, the identified similar portion of data is presented to the user as a similar example. In this way, the user is presented with various similar and particular portions of data (e.g. similar and counter-example portions of data) from which the user can gain insights into the classification process of the neural network.

There is also provided a computer program product comprising a computer readable medium, the computer readable medium having computer readable code embodied therein, the computer readable code being configured such that, on execution by a suitable computer or processor, the computer or processor is caused to perform the method or methods described herein. Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art, from a study of the drawings, the disclosure and the appended claims. In the claims, the word "comprising" does not exclude other elements or steps, and the indefmite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer implemented method for classifying data comprising:
using (202) a model to classify a first portion of data into a classification;
receiving (204) a plurality of other portions of data and classifications for the plurality of other portions of data, the classifications for the plurality of other portions of data having been determined using the model; and
using (206) the model to identify, from the plurality of other portions of data, a particular portion of data which has at least one feature, as used by the model, in common with the first portion of data and a different classification to the first portion of data.

2. A computer implemented method as in claim 1 wherein the model is a neural network.

3. A computer implemented method as in claim 2 wherein using (206) the model to identify the particular portion of data comprises:
determining a first activation pattern describing the way in which neurons in the neural network are activated by the first portion of data when the neural network is used to classify the first portion of data; and
for each other portion of data in the plurality of other portions of data:
determining a second activation pattern describing the way in which neurons in the neural network are activated by said other portion of data when the neural network is used to classify said other portion of data; and
comparing the first activation pattern to the second activation pattern.

4. A method as in claim 3 wherein the first activation pattern describes the way in which neurons in a particular layer of the neural network are activated when the neural network classifies the first portion of data.

5. A method as in claim 3 wherein the first activation pattern describes the way in which a particular neuron in the neural network is activated when the neural network classifies the first portion of data.

6. A method as in claim 3, 4 or 5 wherein the first activation pattern comprises a first set of values representing activation levels of neurons in the neural network and the second activation pattern comprises a second set of values representing activation levels of neurons in the neural network.

7. A computer implemented method as in claim 6, the method further comprising:
performing multidimensional clustering on the first set of values in the first activation pattern and the second set of values for each determined second activation pattern; and
wherein the particular portion of data lies within at least one cluster associated with the first activation pattern of the first portion of data.

8. A computer implemented method as in claim 6 further comprising, for each other portion of data in the plurality of other portions of data:
calculating a multidimensional distance between the first set of values in the first
activation pattern and the second set of values for each determined second activation pattern; and
wherein the step of identifying the particular portion of data is based on the calculated multidimensional distances.

9. A computer implemented method as in claim 8 wherein the particular portion of data comprises a portion of data in the plurality of other portions of data for which the calculated multidimensional distance is lower than a threshold distance.

10. A computer implemented method as in claim 2 wherein using (206) the model to identify the particular portion of data comprises:
identifying a first set of neurons in the neural network that are activated outside of activation ranges associated with said first set of neurons by the first portion of data during the step of using the model to classify the first portion of data; and
using the identified first set of neuron activations as the at least one feature with which to identify the particular portion of data.

11. A computer implemented method as in claim 10 further comprising, for each other portion of data in the plurality of other portions of data:
identifying a second set of neurons in the neural network that are activated outside of activation ranges associated with said second set of neurons by said other portion of data when the neural network classifies said other portion of data; and
comparing the identified second set of neuron activations to the identified first set of neuron activations.

12. A computer implemented method as in any of the preceding claims further comprising:
displaying the identified particular portion of data to a user.

13. A computer implemented method as in any of the preceding claims, further comprising:
using the identified particular portion of data in a training process to improve classifications made by the model.

14. A computer program product comprising a non-transitory computer readable medium, the computer readable medium having computer readable code embodied therein, the computer readable code being configured such that, on execution by a suitable computer or processor, the computer or processor is caused to perform the method of any of the preceding claims.

15. A system (100) comprising:
a memory (106) comprising instruction data representing a set of instructions;
a processor (102) configured to communicate with the memory (106) and to execute the set of instructions, wherein the set of instructions, when executed by the processor (102), cause the processor (102) to:
use a model to classify a first portion of data into a classification;
receive a plurality of other portions of data and classifications for the plurality of other portions of data, the classification for the plurality of other portions of data having been determined using the model; and
use the model to identify, from the plurality of other portions of data, a particular portion of data which has at least one feature, as used by the model, in common with the first portion of data and a different classification to the first portion of data.
